# EUROPEAN PATENT APPLICATION

(11) **EP 3 048 258 A1**
(43) Date of publication of application: **27.07.2016**
(21) Application number: 16151440.1
(22) Date of filing: 15.01.2016
(51) Int. Cl.: F01D 9/02, F01D 11/00

(54) **INNER SEAL FOR A TURBOMACHINE TRANSITION PIECE FRAME ASSEMBLY**

(30) Priority: 22.01.2015 US 201514602899
(71) Applicant: General Electric Company, Schenectady, NY 12345 (US)
(72) Inventor: FADDE, Elizabeth Angelyn, Greenville, SC South Carolina 29615 (US); CIHLAR, David William, Greenville, SC South Carolina 29615 (US)
(74) Representative: Lee, Brenda

(57) **Abstract**

A transition piece frame assembly (54) includes a first frame (70) having an inner frame member (80) and a first inner seal (100) extending along the inner frame member (80) of the first frame (70). The first inner seal (100) includes a first end section (102), a second end section (103), and an intermediate section (104) extending therebetween. A second frame (72) includes an inner frame member (108) and a second inner seal (125) extending along the inner frame member (108) of the second frame (72). The second inner seal (125) includes a first end section (130), a second end section (131), and an intermediate section (132) extending therebetween. A flexible bridge member (140) extends from one of the first and second end sections (102, 103) of the first inner seal (100) and seals against one of the first and second end sections (130, 131) of the second inner seal (125).

## Description

### BACKGROUND OF THE INVENTION

The subject matter disclosed herein relates to the art of turbomachines and, more particularly, to an inner seal for a turbomachine transition piece frame assembly.

Turbomachine systems typically include a turbomachine coupled to an intake system and a load. The turbomachine typically includes a compressor portion and a turbine portion. An airstream passes through the intake system into the compressor portion. The compressor portion forms a compressed air stream that is introduced into the turbine portion. In a gas turbomachine, a portion of the compressed airstream mixes with products of combustion in a combustor assembly forming a hot gas stream that is introduced into the turbine portion through a transition piece. The hot gas stream flows along a hot gas path interacting with various components of the turbine portion.

In certain cases, the combustor assembly includes a plurality of combustors arranged in an annular array about an inlet of the turbine portion. Each of the plurality of combustors is fluidically connected to the turbine portion through a corresponding one of a plurality of transition pieces. Each of the plurality of transition pieces includes a corresponding outlet that is linked to the turbine portion through a corresponding one of a plurality of frames. As such, the plurality of frames forms an annular array about the inlet of the turbine portion. Each of the plurality of frames may include one or more seals that reduce leakage flow at an interface of the transition piece and the inlet of the turbine portion.

### BRIEF DESCRIPTION OF THE INVENTION

According to one aspect of an exemplary embodiment, a transition piece frame assembly includes a first frame having an inner frame member including a first end, a second end, and a first intermediate portion extending therebetween, and an outer frame member including a first end portion, a second end portion and a second intermediate portion extending therebetween. A first inner seal extends along the inner frame member of the first frame. The first inner seal includes a first end section, a second end section, and an intermediate section extending therebetween. A second frame includes an inner frame member having a first end, a second end, and a first intermediate portion extending therebetween, and an outer frame member including a first end portion, a second end portion and a second intermediate portion extending therebetween. A second inner seal extends along the inner frame member of the second frame. The second inner seal includes a first end section, a second end section, and an intermediate section extending therebetween. A flexible bridge member extends from one of the first and second end sections of the first inner seal. The flexible bridge member sealing against one of the first and second end sections of the second inner seal.

According to another aspect of the invention a turbomachine includes a compressor portion, a turbine portion, a combustor assembly including one or more combustors fluidically connected to the turbine portion, and one or more transition pieces fluidically connecting each of the one or more combustors and the turbine portion. A transition piece frame assembly is connected to an outlet of each of the one or more transition pieces and an inlet of the turbine portion. The transition piece frame assembly includes a first frame coupled to one of the one or more transition pieces. The first frame includes an inner frame member including a first end, a second end, and a first intermediate portion extending therebetween, and an outer frame member including a first end portion, a second end portion and a second intermediate portion extending therebetween. A first inner seal extends along the inner frame member of the first frame. The seal includes a first end section, a second end section, and an intermediate section extending therebetween. A second frame is coupled to another of the one or more transition pieces. The second frame includes an inner frame member including a first end, a second end, and a first intermediate portion extending therebetween, and an outer frame member including a first end portion, a second end portion and a second intermediate portion extending therebetween. A second inner seal extends along the inner frame member of the second frame, the seal including a first end section, a second end section, and an intermediate section extending therebetween. A flexible bridge member extends from one of the first and second end sections of the first inner seal. The flexible bridge member seals against one of the first and second end sections of the second inner seal.

These and other advantages and features will become more apparent from the following description taken in conjunction with the drawings.

### BRIEF DESCRIPTION OF DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a schematic view of a turbomachine system including a transition piece frame assembly having an inner seal, in accordance with an exemplary embodiment;
FIG. 2 is a partial cross-sectional view a transition piece linked with a turbine portion of the turbomachine system of FIG. 1 through the transition piece frame assembly, in accordance with an exemplary embodiment;
FIG. 3 is a partial plan view of the transition piece frame assembly including an inner seal, in accordance with an exemplary embodiment;
FIG. 4 is a partial plan view of first and second inner seals, in accordance with an aspect of an exemplary embodiment;
FIG. 5 is a partial plan view of first and second inner seals, in accordance with another aspect of an exemplary embodiment; and
FIG. 6 is a partial plan view of first and second inner seals, in accordance with yet another aspect of an exemplary embodiment.

The detailed description explains embodiments of the invention, together with advantages and features, by way of example with reference to the drawings.

### DETAILED DESCRIPTION OF THE INVENTION

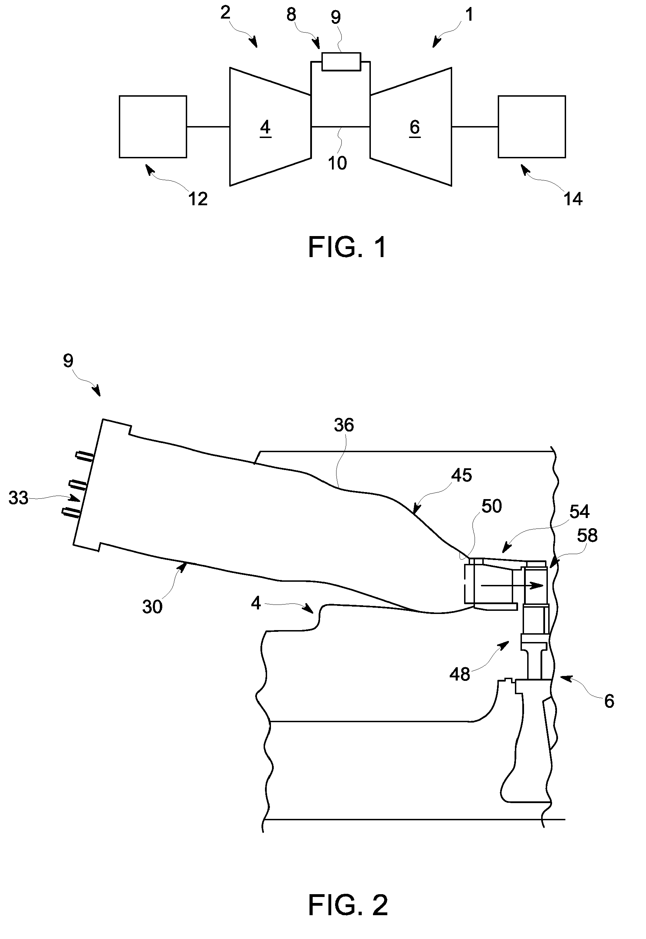

With initial reference to FIGs. 1 and 2, a turbomachine system is indicated generally at 1. Turbomachine system 1 includes a turbomachine 2 having a compressor portion 4 connected to a turbine portion 6 through a combustor assembly 8 including at least one combustor 9. Combustor assembly 8 may include a plurality of combustors 9 arranged in a can-annular array. Compressor portion 4 is also connected to turbine portion 6 via a common compressor/turbine shaft 10. An air inlet system 12 is fluidically connected to an inlet (not separately labeled) of compressor portion 4. A load, indicated generally at 14, is operatively connected to turbine portion 6. Load 14 may take on a variety of forms including generators, pumps, locomotive systems, and other driven loads. Turbine portion 6 may also be connected to an exhaust system (not shown).

Combustor 9 includes a combustor body 30 having a combustor cap 33 and an outlet 36. A transition piece 45 connects combustor assembly 8 to an inlet 48 of turbine portion 6. Transition piece 45 includes a duct (not separately labeled) having an outlet 50 that is linked to turbine portion 6 through a transition piece frame assembly 54. Transition piece 45 channels combustion gases generated in combustor 9 downstream towards a first stage 58 of turbine portion 6. The hot gases expand through a hot gas path (not shown) of turbine portion 6. The hot gases interact with turbine buckets (also not shown) which rotate generating work that drives load 14.

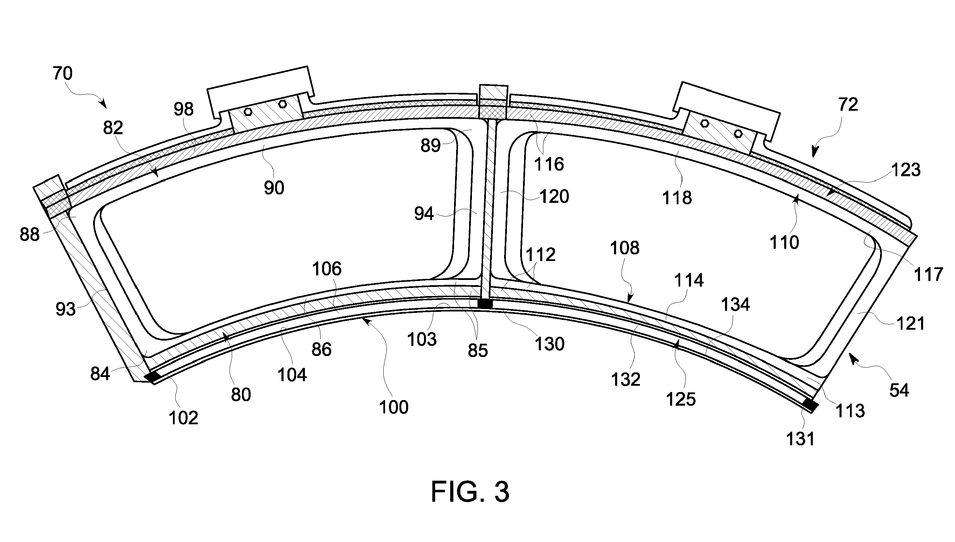

As shown in FIG. 3, transition piece frame assembly 54 includes a first frame 70 and a second frame 72. At this point, it should be understood that the number of frames may vary. Typically, transition piece frame assembly 54 will include a frame for each combustor and associated transition piece. First frame 70 includes an inner frame member 80 and an outer frame member 82. Inner frame member 80 is arranged radially inwardly of outlet 50 of transition piece 45 towards a centerline of turbomachine 2. Outer frame member 82 is arranged radially outwardly of outlet 50 of transition piece 45.

Inner frame member 80 includes a first end 84, a second end 85 and an intermediate portion 86 extending therebetween. Outer frame member 82 includes a first end portion 88, a second end portion 89 and an intermediate portion 90 extending therebetween. A first side frame member 93 extends between first end 84 and first end portion 88. A second side frame member 94 extends between second end 85 and second end portion 89. A first outer seal 98 extends along outer frame member 82 and a first inner seal 100 extends along inner frame member 80. First inner seal 100 includes a first end section 102, a second end section 103 and an intermediate section 104 extending therebetween. First inner seal 100 may be formed from one or more seal strips (not separately labeled) that are covered by a coating 106. Coating 106 may take on a variety of forms including both hard and soft materials. Coating 106 provides abrasion protection for first inner seal 100 during expansions and contractions of transition piece frame assembly 54. Of course it should be understood that first inner seal 100 may be devoid of a coating.

Second frame 72 includes an inner frame member 108 and an outer frame member 110. Inner frame member 108 includes a first end 112, a second end 113, and an intermediate portion 114 extending therebetween. Outer frame member 110 includes a first end portion 116, a second end portion 117 and an intermediate portion 118 extending therebetween. A first side frame member 120 extends between first end 112 and first end portion 116. A second side frame member 121 extends between second end 113 and second end portion 117. A second outer seal 123 extends along outer frame member 110 and a second inner seal 125 extends along inner frame member 108. Second inner seal 125 includes a first end section 130, a second end section 131 and an intermediate section 132 extending therebetween. In a manner similar to that described above, second inner seal 125 may be formed from one or more seal strips (not separately labeled) that are covered by a coating 134. Coating 134 may take on a variety of forms, including both hard and soft materials. Coating 134 provides abrasion protection for second inner seal 125 during expansions and contractions of transition piece frame assembly 54. Of course, it should be understood that second inner seal 125 may be devoid of a coating.

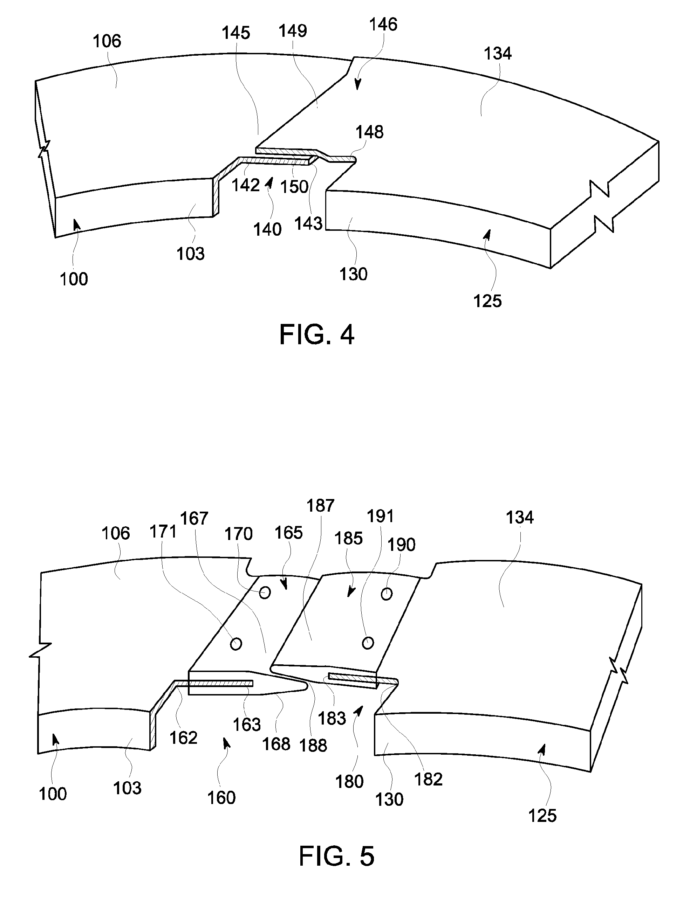

In accordance with an aspect of an exemplary embodiment illustrated in FIG. 4, first inner seal 100 includes a first flexible bridge member 140 arranged at second end section 103. It should be understood that another flexible bridge member (not separately labeled) may be arranged at first end section 102. First flexible bridge member 140 may be formed from one or more of the seal strips (not separately labeled) and includes a first end 142 and a second, cantilevered end 143. First flexible bridge member 140 may be covered by a coating 145 that provides abrasion protection. Coating 145 may take on a variety of forms including both hard and soft materials. Of course, it should be understood that first flexible bridge member 140 may be devoid of a coating. A second flexible bridge member 146 is provided at first end section 130 of second inner seal 125. It should be understood that second end section 131 of second inner seal 125 may also include a flexible bridge member (also not separately labeled).

Second flexible bridge member 146 includes a first end 148 and a second, cantilevered end 149 as well as a recessed portion 150 that is configured to receive first flexible bridge member 140. Second flexible bridge member 146 may also be covered by a coating (not separately labeled). More specifically, first flexible bridge member 140 overlaps second flexible bridge member 146 and nests within recessed portion 150. In this manner, first and second flexible bridge members 140 and 146 may close any gaps that may exist between first and second inner seals 100 and 125. Further, by overlapping one another, first and second flexible bridge members 140 and 146 maintain contact, and thus continue to seal, during expansion and contraction of turbomachine 2 during operation.

Reference will now follow to FIG. 5, wherein like reference numbers represent corresponding parts in the respective views. A first flexible bridge member 160 is arranged at second end section 103 of first inner seal 100. Of course, another flexible bridge member (not separately labeled) may be arranged at first end section 102. First flexible bridge member 160 may be formed by one or more of the seal layers (not separately labeled) and includes a first end 162 and a second, cantilevered end 163. A first wedge element 165 is arranged at second, cantilevered end 163. First wedge element 165 includes a first tapered surface 167 and an opposing, second tapered surface 168. First and second mechanical fasteners or pins 170 and 171 secure first wedge element 165 to first flexible bridge member 160.

A second flexible bridge member 180 is arranged at first end section 130 of second inner seal 125. Of course, another flexible bridge member (not separately labeled) may be arranged at second end section 131. Second flexible bridge member 180 may be formed by one or more of the seal layers (not separately labeled) and includes a first end 182 and a second, cantilevered end 183. A second wedge element 185 is arranged at second, cantilevered end 183. Second wedge element 185 includes a first tapered surface 187 and an opposing, second tapered surface 188. First and second mechanical fasteners or pins 190 and 191 secure second wedge element 185 to second flexible bridge member 180.

First and second wedge elements 165 and 185 overlap at corresponding ones of tapered surfaces 167 and 187. Of course, the relative position of first and second wedge elements 165 and 185 may vary. In a manner similar to that described above, first and second flexible bridge members 160 and 180 may close any gaps that may exist between first and second inner seals 100 and 125. Further, by overlapping one another, first and second wedge elements 165 and 185 maintain contact, and thus continue to seal, during expansion and contraction of turbomachine 2 during operation.

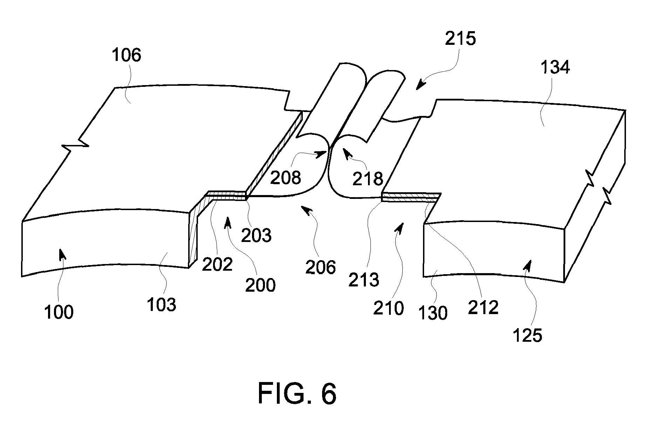

Reference will now follow to FIG. 6, wherein like reference numbers represent corresponding parts in the respective views. A first flexible bridge member 200 is arranged at second end section 103 of first inner seal 100. Of course, another flexible bridge member (not separately labeled) may be arranged at first end section 102. First flexible bridge member 200 may be formed by one or more of the seal layers (not separately labeled) and includes a first end 202 and a second, cantilevered end 203. A first flexible coil 206 extends from second, cantilevered end 203. First flexible coil 206 includes a curvilinear portion 208.

A second flexible bridge member 210 is arranged at first end section 130 of second inner seal 125. Of course, another flexible bridge member (not separately labeled) may be arranged at second end section 131. Second flexible bridge member 210 may be formed by one or more of the seal layers (not separately labeled) and includes a first end 212 and a second, cantilevered end 213. A second flexible coil 215 is arranged at second, cantilevered end 213. Second flexible coil 215 includes a curvilinear portion 218. With this arrangement, first and second flexible coils 206 and 215 abut one another to close any gaps that may exist between first and second inner seals 100 and 125. Further, by abutting at curvilinear portions 208 and 218, first and second flexible coils 206 and 215 may adjust for expansion and contraction of turbomachine 2 during operation.

At this point, it should be understood that the exemplary embodiments describe inner seals for a transition piece frame assembly that cooperate with one another to close gaps between adjacent transition piece frames. Each inner seal may include flexible bridge members that interact with flexible bridge members on adjacent inner seals to reduce leakage on radial inner surfaces of the transition pieces. The flexible bridge members may interact by overlapping or, by direct contact, and maintain contact during operational phases of the turbomachine. More specifically, the flexible bridge members may accommodate expansions and contractions of various turbomachine components to maintain contact and reduce leakages.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defined by the following numbered clauses:
1. A transition piece frame assembly comprising:
   a first frame including an inner frame member including a first end, a second end, and a first intermediate portion extending therebetween, and an outer frame member including a first end portion, a second end portion and a second intermediate portion extending therebetween;
   a first inner seal extending along the inner frame member of the first frame, the seal including a first end section, a second end section, and an intermediate section extending therebetween;
   a second frame including an inner frame member including a first end, a second end, and a first intermediate portion extending therebetween, and an outer frame member including a first end portion, a second end portion and a second intermediate portion extending therebetween;
   a second inner seal extending along the inner frame member of the second frame, the seal including a first end section, a second end section, and an intermediate section extending therebetween; and
   a flexible bridge member extending from one of the first and second end sections of the first inner seal, the flexible bridge member sealing against one of the first and second end sections of the second inner seal.
2. The transition piece frame assembly according to clause 1, further comprising: another flexible bridge member extending from the one of the first and second end sections of the second inner seal, the flexible bridge member and another flexible bridge member overlapping.
3. The transition piece frame assembly according to any preceding clause, wherein one of the flexible bridge member and the other flexible bridge member includes a recessed portion.
4. The transition piece frame assembly according to any preceding clause, wherein the other of the flexible bridge member and the other flexible bridge member nests within the recessed portion.
5. The transition piece frame assembly according to any preceding clause, wherein the flexible bridge member includes a wedge element having at least one tapered surface.
6. The transition piece frame assembly according to any preceding clause, wherein the other flexible bridge member includes a wedge element having at least one tapered surface configured to overlap the at least one tapered surface.
7. The transition piece frame assembly according to any preceding clause, wherein the wedge element is secured to the one of the first and second inner seals through a fastener.
8. The transition piece frame assembly according to any preceding clause, wherein the flexible bridge member includes a curvilinear portion.
9. The transition piece frame assembly according to any preceding clause, wherein the another flexible bridge member includes a curvilinear portion configured and disposed to abut the curvilinear portion of the flexible bridge member.
10. The transition piece frame assembly according to any preceding clause, wherein each of the flexible bridge member and the another flexible bridge member comprise a flexible coil.
11. A turbomachine comprising:
   a compressor portion;
   a turbine portion;
   a combustor assembly including one or more combustors fluidically connected to the turbine portion;
   one or more transition pieces mechanically linking each of the one or more combustors and the turbine portion; and
   a transition piece frame assembly connected to an outlet of each of the one or more transition pieces and an inlet of the turbine portion, the transition piece frame assembly comprising:
      a first frame coupled to one of the one or more transition pieces, the first frame including an inner frame member including a first end, a second end, and a first intermediate portion extending therebetween, and an outer frame member including a first end portion;
      a first inner seal extending along the inner frame member of the first frame, the seal including a first end section, a second end section, and an intermediate section extending therebetween;
      a second frame coupled to another of the one or more transition pieces, the second frame including an inner frame member including a first end, a second end, and a first intermediate portion extending therebetween, and an outer frame member including a first end portion, a second end portion and a second intermediate portion extending therebetween;
      a second inner seal extending along the inner frame member of the second frame, the seal including a first end section, a second end section, and an intermediate section extending therebetween; and
      a flexible bridge member extending from one of the first and second end sections of the first inner seal, the flexible bridge member sealing against one of the first and second end sections of the second inner seal.
12. The turbomachine according to any preceding clause, further comprising: another flexible bridge member extending from the one of the first and second end sections of the second inner seal, the flexible bridge member and another flexible bridge member overlapping.
13. The turbomachine according to any preceding clause, wherein one of the flexible bridge member and the other flexible bridge member includes a recessed portion.
14. The turbomachine according to any preceding clause, wherein the other of the flexible bridge member and the other flexible bridge member nests within the recessed portion.
15. The turbomachine according to any preceding clause, wherein the flexible bridge member includes a wedge element having at least one tapered surface.
16. The turbomachine according to any preceding clause, wherein the other flexible bridge member includes a wedge element having at least one tapered surface configured to overlap the at least one tapered surface.
17. The turbomachine according to any preceding clause, wherein the wedge element is secured to the one of the first and second inner seals through a fastener.
18. The turbomachine according to any preceding clause, wherein the flexible bridge member includes a curvilinear portion.
19. The turbomachine according to any preceding clause, wherein the another flexible bridge member includes a curvilinear portion configured and disposed to abut the curvilinear portion of the flexible bridge member.
20. The turbomachine according to any preceding clause, wherein each of the flexible bridge member and the another flexible bridge member comprise a flexible coil.

## Claims

1. A transition piece frame assembly (54) comprising:
a first frame (70) including an inner frame member (80) including a first end (84), a second end (85), and a first intermediate portion (86) extending therebetween, and an outer frame member (82) including a first end portion (88), a second end portion (89) and a second intermediate portion (90) extending therebetween;
a first inner seal (100) extending along the inner frame member (80) of the first frame (70), the seal (100) including a first end section (102), a second end section (103), and an intermediate section (104) extending therebetween;
a second frame (72) including an inner frame member (108) including a first end (112), a second end (113), and a first intermediate portion (114) extending therebetween, and an outer frame member (110) including a first end portion (116), a second end portion (117) and a second intermediate portion (118) extending therebetween;
a second inner seal (125) extending along the inner frame member (108) of the second frame (72), the seal (125) including a first end section (130), a second end section (131), and an intermediate section (132) extending therebetween; and
a flexible bridge member (140) extending from one of the first and second end sections (102,103) of the first inner seal (100), the flexible bridge member (140) sealing against one of the first and second end sections (130,131) of the second inner seal (125).

2. The transition piece frame assembly (54) according to claim 1, further comprising: another flexible bridge member (146) extending from the one of the first and second end sections (130,131) of the second inner seal (125), the flexible bridge member (140) and another flexible bridge member (146) overlapping.

3. The transition piece frame assembly (54) according to claim 2, wherein one of the flexible bridge member (140) and the other flexible bridge member (146) includes a recessed portion (150).

4. The transition piece frame assembly (54) according to claim 3, wherein the other of the flexible bridge member (140) and the other flexible bridge member (146) nests within the recessed portion (150).

5. The transition piece frame assembly (54) according to claim 2, 3 or 4, wherein the flexible bridge member (160) includes a wedge element (165) having at least one tapered surface (167,168).

6. The transition piece frame assembly (54) according to claim 5, wherein the other flexible bridge member (180) includes a wedge element (185) having at least one tapered surface (187,188) configured to overlap the at least one tapered surface (187,188).

7. The transition piece frame assembly (54) according to claim 6, wherein the wedge element (185) is secured to the one of the first and second inner seals (100,125) through a fastener (190,191).

8. The transition piece frame assembly (54) according to any of claims 2 to 7, wherein the flexible bridge member (200) includes a curvilinear portion (208).

9. The transition piece frame assembly (54) according to claim 8, wherein the another flexible bridge member (210) includes a curvilinear portion (218) configured and disposed to abut the curvilinear portion (218) of the flexible bridge member (200).

10. The transition piece frame assembly (54) according to claim 9, wherein each of the flexible bridge member (200) and the another flexible bridge member (210) comprise a flexible coil (206,215).

11. A turbomachine (2) comprising:
a compressor portion (4);
a turbine portion (6);
a combustor assembly (8) including one or more combustors (9) fluidically connected to the turbine portion (6);
one or more transition pieces (45) mechanically linking each of the one or more combustors (9) and the turbine portion (6); and
a transition piece frame assembly (54) connected to an outlet (50) of each of the one or more transition pieces (45) and an inlet (48) of the turbine portion (6), the transition piece frame assembly (54) comprising:
a first frame (70) coupled to one of the one or more transition pieces (45), the first frame (70) including an inner frame member (80) including a first end (84), a second end (85), and a first intermediate portion (86) extending therebetween, and an outer frame member (82) including a first end portion (88);
a first inner seal (100) extending along the inner frame member (80) of the first frame (70), the seal (100) including a first end section (102), a second end section (103), and an intermediate section (104) extending therebetween;
a second frame (72) coupled to another of the one or more transition pieces (45), the second frame (72) including an inner frame member (108) including a first end (112), a second end (113), and a first intermediate portion (114) extending therebetween, and an outer frame member (110) including a first end portion (116), a second end portion (117) and a second intermediate portion (118) extending therebetween;
a second inner seal (125) extending along the inner frame member (108) of the second frame (72), the seal (125) including a first end section (130), a second end section (131), and an intermediate section (132) extending therebetween; and
a flexible bridge member (140) extending from one of the first and second end sections (102,103) of the first inner seal (100), the flexible bridge member (140) sealing against one of the first and second end sections (130,131) of the second inner seal (125).

12. The turbomachine (2) according to claim 11, further comprising: another flexible bridge member (146) extending from the one of the first and second end sections (130,131) of the second inner seal (125), the flexible bridge member (140) and another flexible bridge member (146) overlapping.

13. The turbomachine (2) according to claim 12, wherein one of the flexible bridge member (140) and the other flexible bridge member (146) includes a recessed portion (150).

14. The turbomachine (2) according to claim 13, wherein the other of the flexible bridge member (140) and the other flexible bridge member (146) nests within the recessed portion (150).

15. The turbomachine (2) according to any of claims 12 to 14, wherein the flexible bridge member (160) includes a wedge element (165) having at least one tapered surface (187,188).
